# EUROPEAN PATENT SPECIFICATION

(11) **EP 3 326 452 B1**
(45) Date of publication and mention of the grant of the patent: **10.06.2020**
(21) Application number: 16200540.9
(22) Date of filing: 24.11.2016
(51) Int. Cl.: A01G 31/06, A01G 9/26, A01G 9/24

(54) **CULTIVATION STORAGE SYSTEM**
ANBAULAGERSYSTEM
SYSTÈMES DE STOCKAGE DE CULTURE

(43) Date of publication of application: 30.05.2018
(73) Proprietor: Heliospectra AB, 402 29 Göteborg (SE)
(72) Inventor: Staffan, Hillberg, 431 36 Mölndal (SE); Pohjanvouri, Timo, 436 50 Hovås (SE); Gilley, Anthony, 425 43 Hisings-Kärra (SE); Bånkestad, Daniel, 402 29 Göteborg (SE); Lindqvist, Johan, 402 29 Göteborg (SE)
(74) Representative: AWA Sweden AB

(56) References cited:
- WO-A1-2015/082924
- WO-A1-2015/152206
- KR-A- 20120 026 743
- US-A1- 2014 115 958
- US-A1- 2015 000 191

## Description

### TECHNICAL FIELD OF THE INVENTION

The present invention relates to cultivation (raising plants) in vertically or horizontally stacked multi-layer storehouse systems. More specifically, the present invention relates to a plant illumination system for multi-layer storehouse cultivation with operational improvements in terms of optimization of the growth process.

### BACKGROUND

An emerging trend in agriculture or cultivation is the so called vertical farming or m³ farming concept as opposed to conventional surface farming or m² farming, and it is a rapidly growing trend considering the large number of vertical farming companies sprouting up across the globe during recent years. This trend is partly fueled by recent developments relating to energy efficiency and cost effectiveness for artificial lighting (e.g. light emitting diodes, LEDs) and environmental control, and partly due to the fact that vertical farming inherently results in an increased crop production as compared to traditional farming. Generally, surface farming or "m² farming" involves growing plants or crops in large and open greenhouses with uniform climate across the whole greenhouse. Consequently "m² farming" offers limited or even no possibility to customize and tailor growth conditions for individual plants, or even for small groups of plants arranged within the same greenhouse. Therefore it can be said that surface farming offers limited possibility for growing different species within the same greenhouse.

Continuingly, vertical farming is based on the concept that a floor area or hall is provided with a storage system having a framework structure (e.g. racks), so as to increase the effective surface for growing plants. The plants are then grown in pots placed in containers (such as e.g. crates or trays) situated in this framework structure, the containers being stacked above and/or besides each other forming vertical and/or horizontal storehouse caches. An example of such a cultivation storage system is disclosed by the Applicant, Heliospectra AB, of Gothenburg Sweden, in EP 3 269 231 A1

Moreover, controlling conditions for growing plants in artificial environments such as greenhouses is always of interest for optimizing plant growth. Conditions such as light (intensity, spectrum, day cycles, etc.), temperature, ambient water, vapor pressure, CO₂ levels, etc. is oftentimes monitored and controlled in order to optimize the growth environment for the plants. Control of the growth conditions may be done by a feedback control system where a status of the plant is monitored and conditions are adjusted according to a predefined desired status of the plants. An example of such a system can e.g. be found in WO 2008/118080 A1, by the same applicant. US 2014/115958 A1, US 2015/000191 A1, WO 2015/082924 A1 and WO 2015/152206 A1 illustrate examples of illuminated cultivation storage systems.

However, the always growing need for higher yield of crops or plants per surface area unit together with the, to this end, promising concept of vertical farming creates a need for new and improved systems which enable efficient and reliable control of the environmental conditions for growing plants arranged in such high density storage systems. Moreover, it would be desirable to have a system capable of optimizing growth conditions for small groups of plants or even for individual plants within the same system in order to be able to grow different species in the same greenhouse.

### SUMMARY OF THE INVENTION

It is therefore an object of the present invention to provide an illuminated cultivation storage system, which alleviates all or at least some of the above-discussed drawbacks of the presently known systems.

This object is achieved by means of an illuminated cultivation storage system and method as defined in the appended claims.

According to an aspect of the present invention there is provided an illuminated cultivation storage system comprising, a framework structure having a three-dimensional framework of horizontal and vertical structural elements forming a grid of vertical storage tunnels or horizontal storage tunnels, a plurality of storage containers for holding growing crops, the storage containers being configured to be introduced into the framework structure in a stacked formation in a vertical storage tunnel or in a train formation in a horizontal storage tunnel. The system further comprises a plurality of lighting devices arranged in the framework structure, each lighting device configured to illuminate at least one storage container; a transport system for moving the storage containers within the framework structure; and an illumination controller connected to each lighting device, each illumination controller configured to control light intensity of an associated lighting device in order to modulate growth of the growing crops illuminated by the lighting device. Further, wherein the interior of the framework structure exhibits distinguishable climate zones, each climate zone having a set of growth parameters, including temperature, within predefined ranges. Moreover, the system further comprises a growth monitoring station integrated with the framework structure and configured to receive a storage container. The growth monitoring station includes sensors for determining a current growth status of crops in a storage container received in the growth monitoring station, a growth controller connected to the transport system and configured to operate the transport system to move a selected storage container to the growth monitoring station, and to return the selected storage container to a designated climate zone based on the current growth status of crops in the selected storage container.

Hereby, a versatile and cost effective m³-farming system is presented with improved functionality in terms of adaptive control of a plant growth cycle. The illuminated cultivation storage system according to the invention further enables a fully automated solution capable of optimizing environmental conditions for growing crops in a high density storage environment by providing a growth monitoring station capable of determining a current growth status of crops in a storage container and subsequently transport the crops to one of a plurality of artificially created climate zones within the framework structure.

The controllers (i.e. illumination controller and growth controller) are preferably microprocessors or any other equivalent type of computing device, and may be realized as software controlled processors. However, each controller may alternatively be realized wholly or partly in hardware.

A transport system is in the present context to be understood as one or more devices arranged to co-operate within a system for efficiently retrieving and moving a storage container residing anywhere within the framework structure. The system may for example include one or more load handling devices operating laterally along openings of the grid of vertical or horizontal storage tunnels, as for example disclosed in WO 2015/019055 A1. The transport system may further include one or more conveyors (e.g. belt conveyors, rolling conveyors, etc.) and a transport system controller configured to receive and transmit data to and from the transport system, and so on. The transport system will be further discussed in the detailed description section and in reference to the appended drawings.

It is to be understood that the term vertical and horizontal in reference to the storage tunnels are considered to encompass slight angular variations from strictly vertical (90° from a horizontal plane) and horizontal (parallel to a horizontal plane). In other words, a slightly tilted "vertical" storage tunnel is still vertical in the context of the present application.

The term "growing crops" (may sometimes be referred to as plants or just crops) is to be interpreted broadly and may be any type of plants such as e.g. herbs, medicinal plants, ornamental and general crops, algae, etc.

A "growth status" (e.g. current growth status) may be defined as the property value(s) of at least one detectable property indicative of the status of the plant. Such properties may include plant height/width, stem size, growth rate, stress, about 15 properties of light reflectance, properties of fluorescence, weight, consumption of CO2, water or nutrition, plant color, size of leaves, size of flowers, number of leaves, flowers, fruits or seeds, occasions when the flowers have been exposed to pollinating insects, time in a specific growth state, etc. Light reflectance is properties of light emitted by a light-emitting device and reflected by the plant. Moreover, properties of fluorescence are properties of roughly 20 fluorescent lights from the plants, such as chlorophyll fluorescent light.

The present invention is based on the realization that by arranging growing crops in storage containers which are introduced in a three-dimensional framework structure having a plurality of distinguishable climate zones, surprising and advantageous results relating to optimization of growth conditions are achieved, leading to a new generation of intelligent vertical farming systems.

Furthermore, the inventors realized that in order to increase efficiency and optimize plant growth in vertical farming systems, one must consider the fact that a plant has a number of optimal growth conditions that may vary over the course of an entire plant life-cycle. Therefore, in order to optimize the plant growth, one should identify and determine a current growth status of a plant in order to be able to select a current optimal environment for that specific plant. Thus, by providing a growth monitoring station, capable of determining a current growth status and subsequently transporting the selected storage container holding the growing crops to a designated climate zone, adaptive selection of the most suitable growth conditions can be selected.

In other words, the system according to the present invention enables environmental control that is tailored for the crops in each individual storage container, based on a desired end result. In a more illustrative example, the system can be compared to being able to cultivate crops by being able to almost instantly sending a plant to the most suitable location on the planet at any given moment in time based on an estimated momentary need of that plant.

The distinguishable climate zones may for example be the result of suitable operation of the lighting devices within the framework structure. In the most basic example embodiment, all of the lighting devices in the system are operated in the same manner, i.e. emitting light of substantially the same intensity and light spectrum. Accordingly, there will be at least two distinguishable climate zones, one warmer zone in the upper volume/section of the framework structure and one colder zone in the lower volume/section of the framework structure. However, in another embodiment of the invention the framework structure is physically divided into (predefined) sub-structures having one or more distinguishable climate zones. By operating the lighting devices differently in different sub-structures, the framework structure will exhibit different climate zones. The framework structure may further comprise partition walls suitably arranged within the framework structure (e.g. at least partly around each sub-structure) in order isolate the climate zones from each other and thereby facilitate independent control of the growth parameters in each sub-structure (e.g. moisture level, CO₂ level, etc.). Moreover, the illuminated cultivation storage system may further comprise a ventilation system (e.g. comprising fans) in order to provide alternative means for controlling growth parameters in each climate zone. For example, two separate climate zones may have the lighting devices operating in the same manner, but have varying temperatures due to suitable operation of the ventilation system. It should be noted that a sub-structure may be configured include a single storage container or a plurality of storage containers depending on the intended application.

In more detail, a climate zone may therefore comprise a set of growth parameters, including temperature, which differs from at least one other climate zone. However, the growth parameters may in some embodiments also include light intensity, light spectrum, CO₂ levels, moisture levels, etc. It is to be noted that, a climate zone may, as mentioned, be a non-predetermined volume or area within the framework structure, and "merely" a result of operating the lighting devices. However, in such a scenario the growth parameters of these climate zones can be monitored (by e.g. a mobile sensor unit which will be described in more detail later) and the storage containers will be transported to the most suitable (designated) climate zone by the transport system.

Thus, inventive system is very versatile and dynamic, and it is furthermore configurable to for example promote growth or any other desired end result, such as e.g. promoting a specific smell, taste, texture, nutrient, etc, by applying a specific growth regime for the crops in a storage container.

Further, in accordance with yet another embodiment of the present invention, the growth controller is further configured to determine a growth regime for the crops in the selected storage container, the growth regime being a set of controllable growth modulators including temperature and illumination. Additionally, in another embodiment of the present invention, the growth controller can be configured to operate the transport system to return the selected storage container to a designated position within the designated climate zone based on the growth regime.

In the context of the present invention, a "growth regime" is a control regime, i.e. a predefined set of controllable growth modulators, such as e.g. light intensity, light spectrum, temperature, CO₂ level, moisture levels, soil nutrition, etc., within predefined ranges. It is for example possible to implement any specific "growth regime", e.g. triggering a specific taste or smell of a plant, by exposing the plant to certain environmental conditions at certain time intervals of its lifetime. For example, a growth regime may include "stressing" the plant in order to trigger a desired development, such as a specific taste, smell, texture, increasing certain nutrition values, etc.

Moreover, in accordance with yet another embodiment of the present invention, a particular illumination controller is configured to control illumination of a particular storage container based on a growth regime determined for crops in this particular storage container. In more detail, the lighting devices in the system are configured to be individually controllable, whereby they can be configured control the illumination of any individual storage container. Thus, storage containers residing within the same climate zone can be illuminated by separate lighting devices whereby individual illumination parameters (e.g. intensity, spectrum) may be enforced by the illumination controllers. This is for example advantageous in scenarios where crops of different storage containers are determined to have different needs in terms of illumination but are still residing within the same climate zone. In other words, the inventive system is very versatile by allowing for customized treatment for each individual storage container.

The growth controller may be configured to directly control or operate the transport system (load handling units, belt conveyers, etc.). Alternatively the illuminated cultivation storage system may comprise a transport system controller which is configured to communicate with the growth controller, whereby the growth controller may operate/control the transport system indirectly. Furthermore, the growth monitoring station may be configured to enable performing growth promoting actions, such as e.g. watering, adding nutrients, etc., in some embodiments of the invention. For example, it may be derived from the determined growth status that the plant or crop is dehydrated whereby water may be provided. This can either be done automatically within the growth monitoring station or manually by an operator. Thus, in accordance with an embodiment of the present invention, the growth monitoring station is configured to receive the storage container in a position in which the storage container is accessible to a user or operator.

Further, in accordance with yet another embodiment of the present invention, storage container has a unique identifier (ID), and wherein the system comprises a database storing historical information relating to the crops in each storage container.

The unique identifier may for example be a virtual ID which is stored and accessed by the growth controller. In more detail, the growth controller can be configured to keep track of the position of each individual storage container at all times, since the growth controller "knows" which storage container is moved by the transport system and also where it is moved to. In other words, the communication between the transport system and the growth controller enables the growth controller to create a type of virtual "mapping" where it can identify and keep track of each individual storage container. Therefore, when a storage container is received at the growth monitoring station, the growth controller will know exactly which specific storage container it is, based on its originating position which is retrieved by the growth controller from the transport system.

The unique identifier may further include a bar code, QR-code or the like, which is suitably arranged on the storage container in order to increase robustness of the system. In more detail, the bar code or QR code may be scanned upon arrival at the growth monitoring station where the aforementioned virtual ID may be verified against the bar code. The unique identifier has the advantageous effect that historical data for the crops of individual storage containers may be stored and subsequently analyzed in order to further optimize the growth regime of any individual crops. Thus, the selection of a growth regime for the crops arranged in any individual storage container may be based on previously selected growth regimes for that specific crop/plant or other previously selected growth regimes for plants of the same or similar species. This information may be helpful, as the previously applied growth regimes will have affected the crops/plants in certain ways which may be more or less desirable. Therefore, the growth controller can be configured to access the database storing the historical information and a growth regime can be determined more accurately with increased probability of reaching a desired end result.

In more detail, the database comprising historical information can be used to extract statistics which can be used for selecting a growth regime which has a high probability of reaching a desired growth state, e.g. going from a seedling stage to a vegetative stage. Thus, the likelihood of reaching a desired growth state is increased by selecting a growth regime that in the past has proven to be successful. The system becomes self-learning, leading to improved performance and efficiency.

Even further, in an embodiment of the present invention, the framework structure may include a set of sensors placed at different locations within the framework structure, each sensor being configured to detect growth parameters in a current location of the sensor. The "fixed" sensors can then be used to ensure that the growth parameters in each climate zone of the system are within the predefined ranges, i.e. that each climate zone has the desired characteristics. Furthermore, it is also conceivable to apply mathematical models (using input parameters such as total volume, size of the framework structure, number of storage containers, illumination parameters, ventilation parameters, etc.) in order to achieve the desired characteristics (growth parameters within predefined ranges) in each climate zone. The "fixed" sensors can then be used to calibrate the mathematical models.

However, in yet another embodiment of the present invention, the illuminated cultivation storage system further comprises at least one mobile sensor unit, which is configured to be introduced into the framework structure in a similar way as the storage containers, said sensor unit being provided with sensors to detect growth parameters in a current location of the sensor unit. In this embodiment, a mobile sensor unit may for example be a body having a similar shape and size as a storage container comprising a set of sensors in order to detect growth parameters of e.g. a specific climate zone. Thus, if there is a need for retrieving data related to a specific climate zone within the framework structure, the mobile sensor unit can be transported to a suitable location and retrieve valuable information related to the growth conditions in that area. Moreover, the mobile sensor unit may be connected (e.g. wirelessly) to the illumination controllers and configured to calibrate each lighting device. The mobile sensor unit is preferably connected to the growth controller and to the illumination controller(s) in order to transmit/receive data.

Furthermore, according to yet another embodiment of the present invention, the growth controller is further configured to apply a state model including a set of predefined growth states, each growth state being associated with at least one growth regime, and based on the determined growth status, identify a current growth state and select a growth regime associated with the current growth state.

It should be noted that in the context of the present invention, the expression "growth state" most generally refers to a state of the plant where a selection of growth parameters is within a defined range. Thus, a growth state for a specific crops or plant may be derived from a determined growth status for that specific crop or plant. For each such growth state there is one or several growth regimes (i.e. control regimes) that are considered suitable for that particular state. For example, there are two growth regimes, A and B, associated with one growth state; however, growth regime A promotes growth while growth regime B promotes a specific taste.

Also, the term "growth state" is the context of the present invention to be construed from a control engineering perspective, and for example two plants may visually appear to identical but may very well be in different growth states, e.g. the first plant may be more stressed than the second plant.

Moreover, the selection of growth regime may in some embodiments of the invention also be based on historical data of the crop(s) in the storage container. This may for example be done as previously described where each storage container has a unique identifier (ID), and the system further comprises a database storing historical data relating to the crops in each storage container. This database may accordingly be accessed by the growth controller when a growth regime is to be selected whereby the accuracy and reliability of the system may be improved. Also, the selection of growth regime may in some embodiments be based on a desired end growth state. For example, two individual storage containers may hold a crop or plant of the same kind/species, but for the first storage container one desires to have an end growth state where the crop has a specific smell, while for the second storage container one desires to have an end growth state where the crop has a maximized size. Thus, in this example the two crops may be associated with two different selected growth regimes in order to reach two different end growth states, similarly to growth regimes A and B described previously.

Further, when a current growth state has been indentified and a growth regime has been selected, the associated storage container can be transported to a desired/designated climate zone within the framework structure. In some embodiments of the present invention, each climate zone is associated with one and only one growth state. This means that all storage containers residing in a specific climate zone hold crops which are in the same growth state, and vice versa.

As briefly mentioned in the background section a problem with conventional m² farming systems is that the climate is uniform across the whole surface making it hard to grow crops or plants of different species within the same green house, at least not efficiently. The inventive system allows for combining and mixing different species of plants within the same framework structure and more importantly the inventive system makes it possible to provide each of the different species with unique and tailored environments within the same "house". Moreover the system allows for having variable batch sizes without sacrificing efficiency.

Further, if a unique environment (climate zone) is needed it is possible to provide such an environment in a specific section of the framework structure in a quick and simple fashion, either by suitable operation of lighting devices within that specific section or physically creating a more isolated substructure by arranging partition walls within the framework structure. The storage containers holding growing crops may then "flow" through this climate zone during a specific phase of a growth cycle. It may further be advantageous to combine plants or crops into a first group which thrive in colder climates and accordingly combine other plants or crops into a second group which thrive in warmer climates. Also, combining plants or crops which require reduced light intensity may be advantageous if it is needed to lower the temperature in a specific section of the framework structure.

In accordance with another aspect of the present invention, there is provided a method for cultivating crops in an illuminated cultivation storage system comprising a framework structure having a three-dimensional framework of horizontal and vertical structural elements forming a grid of vertical storage tunnels or horizontal storage tunnels, a plurality of storage containers for holding growing crops and wherein the interior of the framework structure exhibits distinguishable climate zones having a set of growth parameters, including temperature, within predefined ranges. The method comprises receiving a storage container holding growing crops; determining a current growth status of the growing crops in the received storage container; returning the received storage container to a designated climate zone based on the determined current growth status of the growing crops in the received storage container.

With this aspect of the invention, similar advantages and preferred features are present as in the previously discussed first aspect of the invention and vice versa.

These and other features and advantages of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 is a perspective view of an illuminated cultivation storage system having a plurality of storage containers holding growing crops arranged therein. as well as a transport system together with a growth monitoring station, in accordance with an embodiment of the present invention;
Fig. 2 is a perspective view of an illuminated cultivation storage system in accordance with another embodiment of the present invention.
Fig. 3 is a partly exploded perspective view of two vertical storage tunnels in an illuminated cultivation storage system in accordance with an embodiment of the present invention;
Fig. 4 is a perspective view of four horizontal storage tunnels in an illuminated cultivation storage system in accordance with yet another embodiment of the invention;
Fig. 5 is a schematic block representation of an illuminated cultivation storage system in accordance with another embodiment of the invention.
Fig. 6 is a schematic representation of an illuminated cultivation storage system in accordance with an embodiment of the present invention.
Fig. 7 is a schematic flow chart representation of a method according to an aspect of the present invention.

### DETAILED DESCRIPTION OF THE INVENTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In illustrations containing a large number of identical elements or devices, only a few of the devices/elements will be provided with a reference mark in order to reduce clogging of the figures.

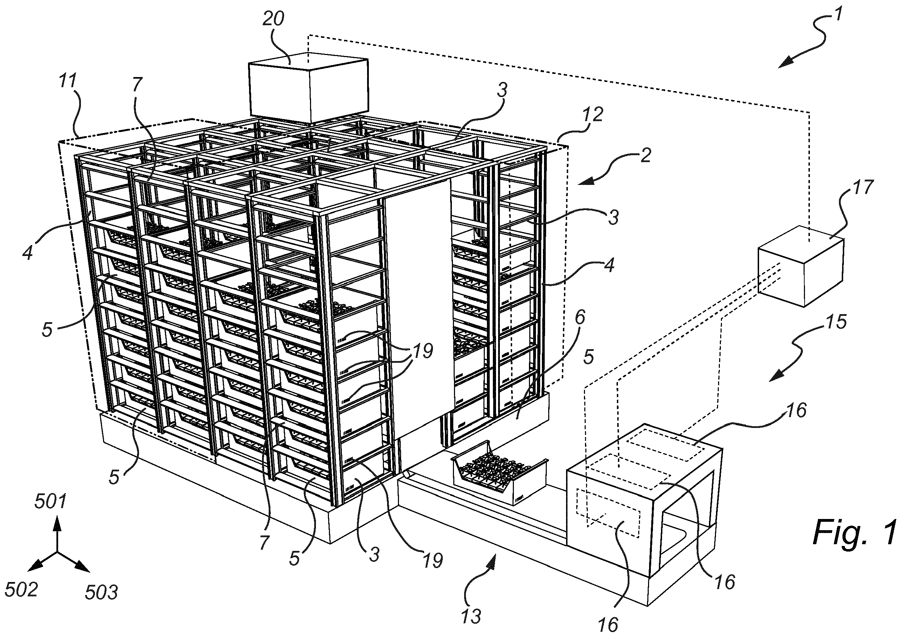

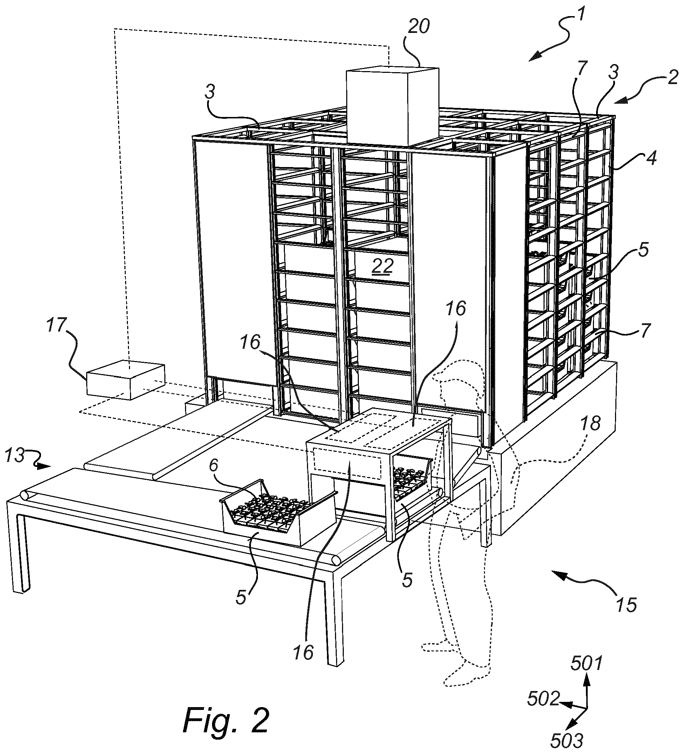

In each of Fig. 1 and Fig. 2 a perspective view illustration of an illuminated cultivation storage system 1 having a plurality of storage containers 5 holding growing crops 6 is shown. The growing crops 6 (may sometimes be referred to as plants) may of course be any type of plants such as e.g. herbs, medicinal plants, ornamental and general crops, etc. Also, the storage containers 5 may be used for soil, hydroponic or aquaponic cultivation.

The storage system 1 further has a framework structure 2 having a three-dimensional framework of horizontal structural elements 3 and vertical structural elements 4. Further, the framework structure 2 forms a grid of vertical storage tunnels in which the storage containers 5 are stacked on top of each other along a vertical axis 501 of the storage system 1. The storage containers 5 are provided with open sides in order to facilitate illumination of the growing crops 6 by the lighting devices 7. The storage containers 5 may alternatively or additionally comprise a mesh-like body/structure, transparent body/structure or similar, through which light emitted from the lighting devices 7 may propagate. The storage containers 5 are accessible by an operator or a load handling device 20 from the top opening, via which the storage containers 5 may be inserted or removed. The term vertical storage tunnels is therefore in reference to the access opening whereby the storage containers 5 are intended to be stacked vertically (along axis 501) and accessed from the top openings of the vertical storage tunnels. The load handling device 20 forms at least a part of a transport system for moving the storage containers 5 within the framework structure 2.

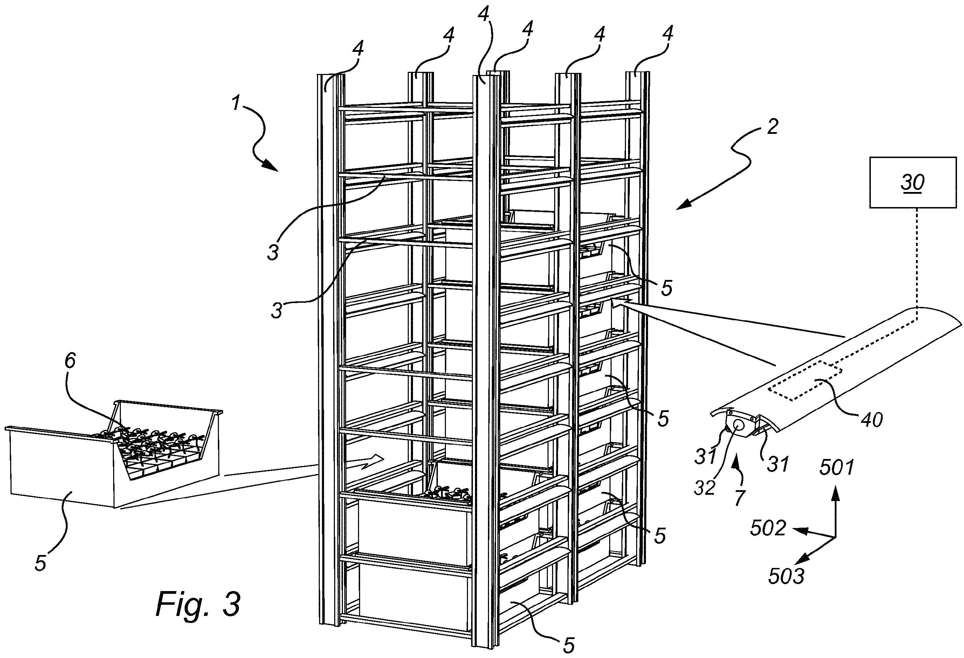

The storage system 1 further comprises an illumination controller connected to each lighting device (see e.g. reference 30 in Fig. 3) which is configured to control light intensity of an associated lighting device in order to modulate growth of said growing crops illuminated by the lighting device 7. The illumination controller may further be configured to control the spectrum of emitted light of the lighting device 7. The operation and characteristics of the illumination controller 30 will be further discussed in reference to Fig. 3.

The interior of the framework structure 2 further exhibits distinguishable climate zones, e.g. as a result of operation of the lighting devices 7. Each climate zone has a set of growth parameters, including temperature, within predefined ranges. For example, by dedicating a first section or portion of the framework structure 2 for high intensity illumination of the crops in the storage container 5, a second section for low intensity or illumination and a third section with no illumination there will consequently be three distinguishable climate zones into which the storage containers 5 may be placed, based upon the determined current growth status for the crops 6 in each container 5. The formation of the climate zones within the framework structure 2 may either be predefined and the storage containers 5 are placed within the framework structure 2 in accordance with the predefined climate zones. Alternatively, the climate zones may be a consequence of how the storage containers 5 holding growing crops 6 are placed within the framework structure and the illumination resulting from this placement, i.e. the climate zones may be non-predefined (not established in advance). In the latter case it may for example be decided that a group of storage containers 5 are to be exposed to high intensity illumination, this group may suitably be arranged in a specific section or portion of the framework structure 2, whereby a distinguishable climate zone will be formed in that specific section or portion.

Moreover, the framework structure 2 may be physically divided into predefined sub-structures 11, 12, each sub-structure having one or more distinguishable climate zones. The climate zones of the framework structure can be shielded or isolated with respect to each other by e.g. appropriately positioned partition walls or the like (not shown). Furthermore, by arranging the climate zones as separate structures or rooms, the CO₂ level and moisture level can be controlled and set to be within predefined ranges. Moreover, the system 1 may include a ventilation system, fans or the like, whereby the growth parameters of each climate zone may even be further customized.

Further, the illuminated cultivation storage system 1 includes a growth monitoring station 15 integrated with the framework structure 2 and configured to receive a storage container 5. Thus, the growth monitoring station 15 and the associated transporting means, here in the form of a (belt) conveyor 13, are considered to form a portion of the illuminated cultivation storage system 1. The storage containers 5 can be moved from a position within the framework structure 2 to the growth monitoring station 15 via a conveyor 13. The load handling device 20 and conveyor 13 are considered to be included in a transport system of the illuminated cultivation storage system 1. The growth monitoring station includes sensors 16 (e.g. optical sensors, cameras, etc.) for determining a current growth status of crops in a storage container received in the growth monitoring station 15.

The growth status of a crop 6 is to be interpreted as property value(s) of at least one detectable property indicative of the status of the plant/crop 6. Such properties may include plant height/width, stem size, growth rate, stress, about 15 properties of light reflectance, properties of fluorescence, weight, consumption of CO2, water or nutrition, plant color, size of leaves, size of flowers, number of leaves, flowers, fruits or seeds, occasions when the flowers have been exposed to pollinating insects, time in a specific growth state, etc. Light reflectance is properties of light emitted by a light-emitting device and reflected by the plant. Moreover, properties of fluorescence are properties of roughly 20 fluorescent lights from the plants, such as chlorophyll fluorescent light.

Furthermore, the growth monitoring station 15 includes a growth controller 17 (schematically indicated) connected to the transport system to move a selected storage container to the growth monitoring station 15, and to return that storage container 5 to a designated climate zone 11, 12, based on the determined current growth status of the crops 6 in the storage container 5. The growth monitoring station 15 may be fully automated, or accessible by an operator 18 whereby certain tasks may be performed manually. Furthermore, the storage containers 5 have unique identifiers stored and accessed by the growth controller 17. The growth controller 17 is configured to always keep track of the position of each storage container 5 within the framework structure 2, based on information received from the transport system (e.g. load handling unit 20). For example, if the load handling unit 20 moves to a specific column or tunnel and picks up the second form the bottom storage container 5, the growth controller 17 will know which storage container 5 that is since it is keeping track of every unit or storage container 5 within the framework structure 2. Thus, the growth controller 17 can be configured to store information or data, such as e.g. the growth status of the crops 6 of each individual storage container 5, in a database associated with the system 1 and consequently determine a growth regime at least partly based on historical data retrieved from the database. Furthermore, the unique identifiers may include bar-codes 19, which may be scanned in association with the growth monitoring station 15 by a scanning device (not shown). The unique identifiers may however comprise other identification means such as QR-codes, magnetic strips, electronic chips, etc.

For example, the framework structure 2 may be arranged with two climate zones 11, 12, a first climate zone 11 where the lighting devices 6 are operated at high illumination intensity in order to simulate bright, day-time conditions. The first climate zone 11 will consequently have an elevated temperature due to the power dissipation from the lighting devices 6. The temperature may also in addition or as an alternative be controlled by suitable operation of any cooling arrangement provided in the cultivation storage system 1. In the second climate zone 12 the lighting devices may be operated at low intensity or no intensity, in order to simulate e.g. night-time conditions, the temperature in the second climate zone 12 will as a consequence also be lower. Therefore in this example, a storage container 5 holding growing crops 6 may be moved between the two climate zones 11, 12 based on a determined current growth status (and accordingly the current needs) of the growing crops 6.

Even further, the growth controller 17 may further be configured to determine a growth regime for the crops 6 in the selected storage container (i.e. a storage container received by the growth monitoring station 15). The growth regime is a set of controllable growth modulators including temperature and illumination. Thus, the growth controller 17 may accordingly be configured to operate the transport system to return a storage container 5, holding crops for which a growth regime has been determined, to a specific designated climate zone 11,12 within the framework structure 2 based on the determined growth regime.

In reference to the above discussed example with the two climate zones 11, 12, a determined growth regime for crop residing in a storage container 5 may for example include that the selected storage container 5 is to be subjected to day-time conditions within a specific temperature range, whereby the first climate zone 11 may be designated by the growth controller 17. Moreover, a particular illumination controller can be configured to control illumination of the selected storage container based on a growth regime determined for the crops 6 in this particular selected storage container 5. The determined growth regime can for example include exposure to light of a particular wavelength whereby the illumination controller is configured to illuminate the growing crops within that specific/selected storage container with light of that wavelength.

In Fig. 2, a mobile sensor unit 22 is schematically illustrated within the framework structure 2. The mobile sensor unit 22 has a set of sensor (e.g. temperature sensors, optical sensors, etc.), whereby growth parameters of any climate zone within the framework structure can be detected. The mobile sensor unit 22 is preferably configured to communicate with the growth controller 17, via e.g. a wireless connection. Moreover, the mobile sensor unit 22 reduces the need for having fixed sensors arranged at various locations within the framework structure, which facilitates maintenance of the system. The mobile sensor unit 22 may even be configured to communicate with the illumination controllers of each lighting devices 7, whereby the mobile sensor unit 22 can advantageously be used to calibrate each lighting device 7. For example, it is likely that the performance of a lighting device 7 may be degraded over time, e.g. reduced illumination intensity, this may however oftentimes be compensated for by the illumination controller. Also, it is conceivable that certain positions within the framework structure 2 will result in uneven illumination of the storage containers 5 residing in these positions, the mobile sensor unit 22 may be used to determine the illumination distribution at these positions and the storage containers 5 can e.g. be rotated by the load handling unit 20 at predefined moments in time.

Furthermore, the growth monitoring station 15 is configured to enable performing of growth promoting actions, such as watering, adding nutrients, etc. The growth promoting actions can be fully automated, by e.g. providing water nozzles (not shown) within the growth monitoring station 15, or they may be manually performed by e.g. an operator or user 18.

Fig. 3 illustrates a partly exploded view of two vertical storage tunnels of a framework structure 2. Each lighting device 7 comprises multiple light sources 31 and each lighting device 7 is arranged such that the light sources 31 are distributed between a pair of adjacent vertical structural elements 4. The lighting devices 7 are attached to and extend between pairs of adjacent vertical structural elements 4 of the framework structure 2. Alternatively, some of the lighting devices 7 may be mounted to a horizontal structural element 3, which in turn are attached to and extend between a pair of adjacent vertical structural elements 4. The lighting devices 7 can be said to form elongated structures having one or more light bars 31 or LED bars 31 attached thereto, whereby the light bars 31 can be arranged to extend along and in parallel to the horizontal structural elements. The term light bar or LED bar is in the present context to be understood as an elongated body comprising a plurality of light sources (e.g. LEDs) distributed along a row or line.

Further, in a scenario where a storage compartment, arranged to house a single storage container, has a rectangular cross section, when viewed from above, the lighting devices may be arranged to extend in parallel to the longer horizontal structural elements 3. Rectangular cross section of a storage compartment should be interpreted as having an extension along axis 503 that is greater than an extension along axis 502. A storage compartment is to be understood as a sub section or sub volume within a horizontal or vertical storage tunnel, arranged to house or contain one single storage container 5. Moreover, some of the lighting devices 7 may be arranged with dual light distribution in order to be capable of illuminating at least a portion of two adjacent storage compartments. The lighting devices 7 may each comprise two (LED) light bars 31 such that each of the light bars 31 illuminates one of the two adjacent storage compartments. Alternatively, each lighting device 7 may comprise one light bar 31 and an optical arrangement (e.g. one or more lenses) whereby dual light distribution for the two adjacent storage compartments is achieved.

Other structural arrangements of the framework structure and the lighting devices are feasible, and considered to fall within the scope of the appended claims, and will for the sake of brevity not be further discussed. For example, the lighting devices 7 may include cooling means, such as fluid channels 32 in order to enable liquid cooling of the lighting devices 7. Such and other examples are disclosed in the European Patent Application EP 3 269 231 A1 by the Applicant Heliospectra AB of Gothenburg Sweden.

Even further, an illumination controller 30 is schematically indicated in Fig. 3. The illumination controller 30 is in turn connected to a lighting device 7, and more specifically to an individual control unit 40 of a lighting device 7. The illuminated cultivation storage system may accordingly have one illumination controller 30 connected to each lighting device 7 within the framework structure 2, or each lighting device 7 may have an independent illumination controller 30 which in turn is part of a larger system or connected to an overall system controller. Such modifications resulting in equivalent structures are considered to fall within the scope of the appended claims.

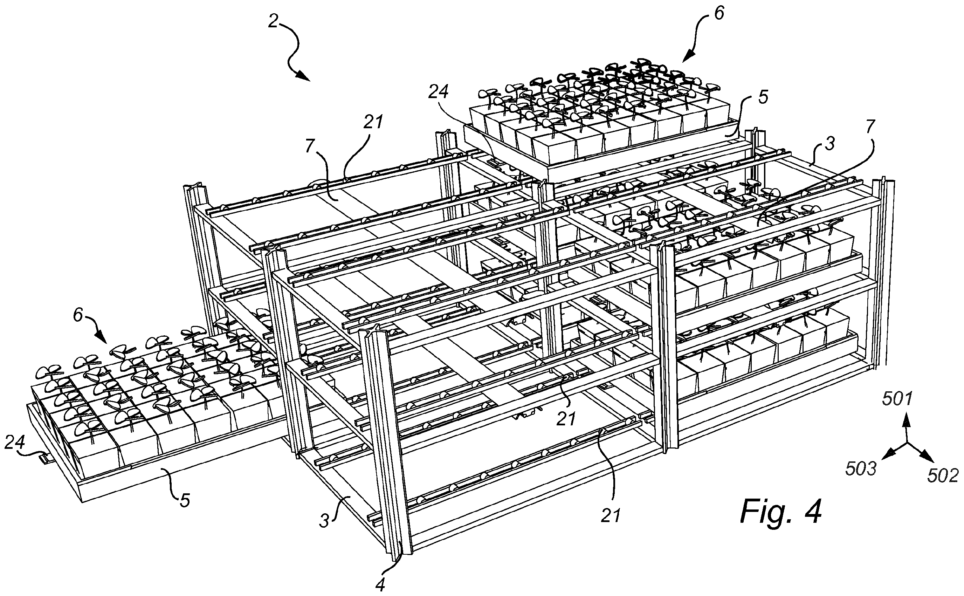

In Fig. 4 a perspective view illustration of at least a segment of an illuminated storage system 1 having a framework structure 2 of horizontal 3 and vertical structural elements 4 forming a grid of horizontal storage tunnels is shown. Here, the storage containers 5 are arranged in a train formation and can be accessed from a side opening of the framework structure, and rolled in and out of the framework structure on a rail 21 comprising a plurality of wheels. The storage containers 5 can however be arranged to slide on a set of sliding rails (not shown). The storage containers 5 are connected to each other in the horizontal storage tunnel with connection elements 24 provided on each storage container. In the illustrated embodiment of Fig. 4 the lighting devices (LED bars) extend along the shorter axis 502 of the storage container. However, the lighting devices 7 may be arranged to have a longitudinal extension along an axis parallel to a longer axis 503 of the storage container 5, i.e. they may be rotated 90° about a vertical axis 501.

Further, the lighting devices 7 are similar to the lighting devices disclosed in Figs. 1-3; however, in this embodiment they are mounted to a pair of adjacent horizontal structural elements 3. Alternatively, the lighting devices 7 can be mounted to a pair of adjacent rails 21.

The lighting devices 7 has at least one light source arranged to illuminate the storage containers 5 residing directly below the lighting device 7. In an illuminated storage system having horizontal storage tunnels the lighting devices 7 are preferably mounted in a position centrally above each storage container, or centrally above a section/compartment of each horizontal storage tunnel arranged to contain/house a storage container 5. Moreover, the storage containers 5 are in the form of trays, whereby the growing crops can be more efficiently illuminated as there are no light obstructing bodies (e.g. storage container side walls) present.

An illuminated cultivation storage system 1 as shown in Fig. 4, having horizontal storage tunnels is advantageous in terms of lighting and complexity as compared to vertical storage tunnels. Further, the storage containers 5 are more easily accessible to manual operators as they can be moved via side openings. However, managing the energy density and temperature may be more complex as there are more mechanical structures involved. In lighting device 7 may have one or more light bars comprising one or more light sources (e.g. LEDs).

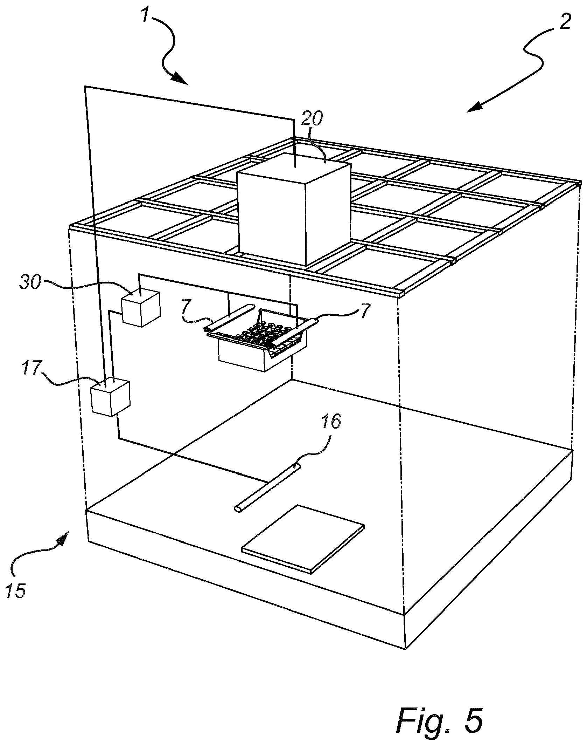

Fig. 5 is a schematic block-type illustration of an illuminated cultivation storage system 1 in accordance with another embodiment of the invention. Here, the growth monitoring station 15 is provided within the framework structure 2 as a type of storage compartment. In other words, the system 1 comprises a specific slot or storage compartment which will act as a growth monitoring station 15, having one or more sensors 16 for determining a current growth status of crops arranged in a storage container which is positioned in the growth monitoring station 15. This "internal" growth monitoring station 15 is preferably centrally positioned within the framework structure 2 in order to reduce transporting distances within the system 1, and thereby increase the life span and reduce maintenance needs of the load handling unit(s) 20.

The growth monitoring station 15 also has a growth controller 17 connected to the transport system (represented by a load handling unit 20) and to the illumination controller(s) 30. Aside from advantages in terms of utilization of space and reduced costs, this type of arrangement (as illustrated in Fig. 5) has the advantage of shorter time in transport for each storage container 5 to and from the growth monitoring station 15.

In an alternative embodiment of the invention (not shown) a growth monitoring station may be integrated into the load handling unit 20. This growth monitoring station may either be a simplified monitoring station suitable for doing quick checks of the status of the crops. However, it may also be a "full" growth monitoring station having all functions of a stationary growth monitoring station (such as e.g. irrigation means) as described in this application. By integrating the growth monitoring station into the load handling unit 20 the transporting distances within the system will be even further reduced, thereby reducing the wear of the load handling unit and consequently reducing maintenance needs. Such a growth monitoring station (within the load handling device) is however considered to fall within the term "a growth control station integrated with the framework structure".

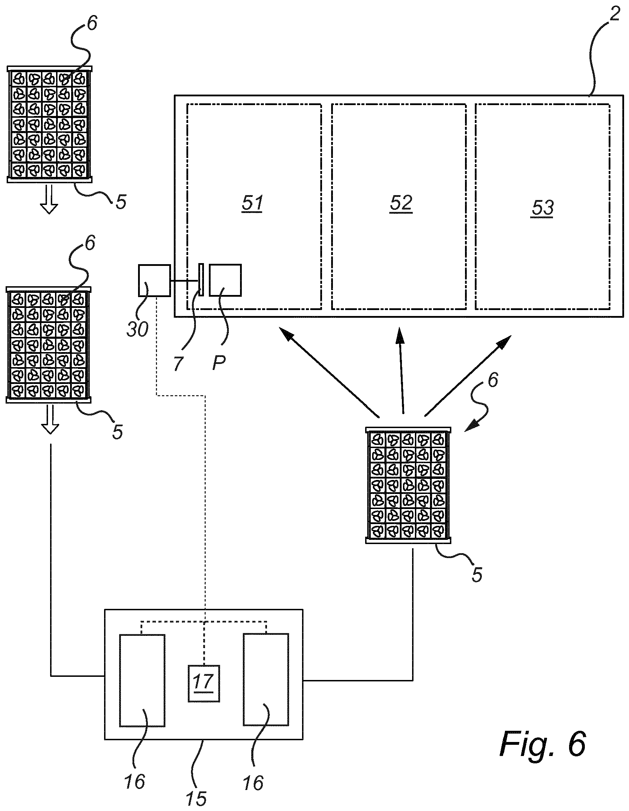

Fig. 6 is a schematic block representation of an illuminated cultivation storage system in accordance with an embodiment of the invention. The figure is intended to elucidate an operative flow of the system. The storage containers 5 holding growing crops 6 are retrieved and transported to the growth monitoring station 15 where an analysis is performed in order to determine a growth status of the growing crops 6. Afterwards, the storage containers 5 are transported or returned to a designated climate zone 51-53 based on the determined current growth status. The growth controller 17 is preferably configured to determine a growth status from sensor data provided by the sensors 16. Some parameters included in the determining of a growth status may also be provided manually by an operator or user from a visual inspection or from images retrieved by one or more cameras suitable arranged in the growth monitoring station 15. The growth controller 17 can further be configured to determine a growth regime for the crops in the selected/received storage container and thereafter operate the transport system to return the selected storage container to a designated position within the designated climate zone 51-53 based on the growth regime. For example, the determined growth regime may include exposure of light within a particular wavelength spectrum and/or being housed in a zone having a specific temperature, etc. The growth controller is preferably configured to retrieve data containing growth parameters of each climate zone 51-53, and also of specific positions within each climate zone, in order to control the transport system to return each storage container to the appropriate position P within the designated climate zone, e.g. climate zone 51.

Thus, when a storage container 5 holding growing crops 6 is received in the growth monitoring station 15, a growth status of the crops 6 is determined, a growth regime is selected/determined by the growth controller and the container is transported to the appropriate climate zone 51-53. Further, the growth controller 17 can be configured to apply a state model including a set of predefined growth states, where each growth state is associated with at least one growth regime. The operational sequence of the growth controller 17 will accordingly be to determine a growth status of the crops, identify a current growth state and select an appropriate growth regime associated with the determined current growth state. Subsequently, the micro-climate in position P can be controlled by controlling the lighting device 7 at position P via illumination controller 30.

Further, each of the climate zones 51-53 is associated with one and only one growth state. Thus, only storage containers 5 in which crops 6 have the same growth state are arranged within the same climate zone 51-53.

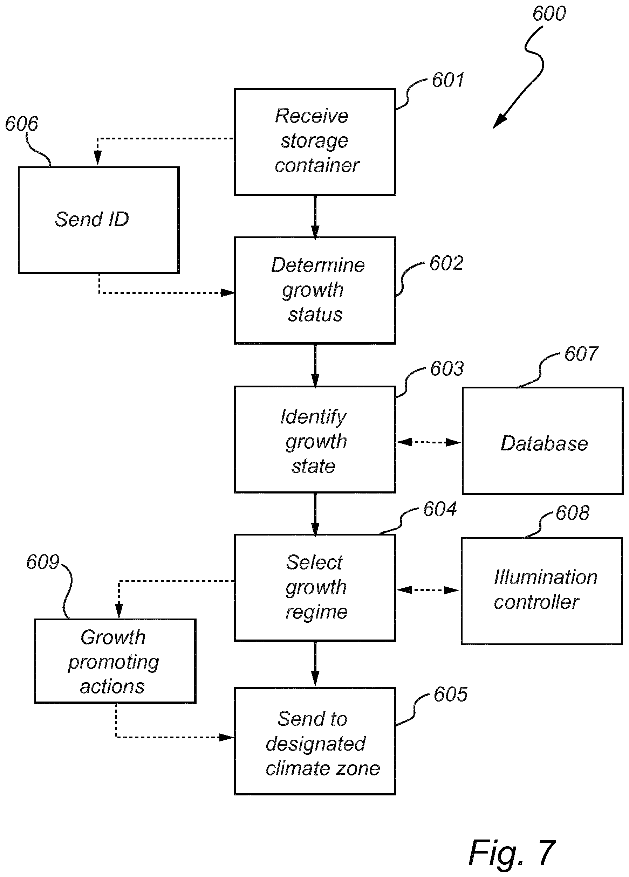

Fig. 7 is a schematic flowchart representation of a method according to an embodiment of the invention. The method is described by an operational sequence 600 starting with a step of receiving 601 a storage container holding growing crops, and if the storage container has a unique identifier, ID, scanning 606 the ID. The ID serves to enable data logging of each individual storage container, and in particular to the crops or plants held by each storage container.

Next, is a step of determining 602 a growth status of the growing crops, e.g. by means of one or more sensors, and thereafter identifying 603 a growth state of the growing crops. The step of identifying 603 a growth state is considered to include a step of applying a state model including a set of predefined growth states which can be accessed from e.g. a database 607. The database may further include historical information relating to the crops in each storage container, tagged with each unique identifier as previously described. Thus, historical data may advantageously be used to make better predictions and estimations of growth states and which growth regime to apply in order to reach a desired end state. Further, a step of selecting 604 a growth regime is performed based on the determined growth status and/or the identified growth state. The growth regime is, as mentioned, also advantageously selected at least partly based on historical data retrieved from the database 607. Moreover, once a growth regime has been selected 604, an illumination controller 608 is configured to control an associated illumination device based on the growth regime determined for the crops in this particular storage container.

The sequence 600 ends with a step of sending 605 the storage container to a designated climate zone and in some cases to a designated slot/storage compartment within the designated climate zone by controlling a transport system. However, before the storage container is sent to the designated climate zone, growth promoting actions may be performed such as e.g. watering, adding nutrients, etc.

## Claims

1. An illuminated cultivation storage system comprising:
a framework structure having a three-dimensional framework of horizontal and vertical structural elements forming a grid of vertical storage tunnels or horizontal storage tunnels;
a plurality of storage containers for holding growing crops, the storage containers being configured to be introduced into the framework structure in a stacked formation in a vertical storage tunnel or in a train formation in a horizontal storage tunnel;
a plurality of lighting devices arranged in the framework structure, each lighting device configured to illuminate at least one storage container;
a transport system for moving said storage containers within the framework structure; and
an illumination controller connected to each lighting device, each illumination controller configured to control light intensity of an associated lighting device in order to modulate growth of said growing crops illuminated by said lighting device;
wherein the interior of the framework structure exhibits distinguishable climate zones, each climate zone having a set of growth parameters, including temperature, within predefined ranges, **characterised in that** the illuminated cultivation storage system comprises
a growth monitoring station integrated with the framework structure and configured to receive a storage container, said growth monitoring station including:
sensors for determining a current growth status of crops in a storage container received in the growth monitoring station,
a growth controller connected to the transport system and configured to operate the transport system to move a selected storage container to the growth monitoring station, and to return the selected storage container to a designated climate zone based on the current growth status of crops in the selected storage container.

2. The system according to claim 1, wherein the growth controller is further configured to determine a growth regime for the crops in the selected storage container, the growth regime being a set of controllable growth modulators including temperature and illumination.

3. The system according to claim 2, wherein the growth controller is configured to operate the transport system to return the selected storage container to a designated position within the designated climate zone based on the growth regime.

4. The system according to claim 2 or 3, wherein a particular illumination controller is configured to control illumination of a particular storage container based on a growth regime determined for crops in this particular storage container.

5. The system according to any one of the preceding claims, wherein each storage container has a unique identifier (ID), and wherein the system comprises a database storing historical information relating to the crops in each storage container.

6. The system according to any one of the preceding claims, wherein the framework structure is physically divided into sub-structures, each sub-structure having one or more distinguishable climate zones.

7. The system according to any one of the preceding claims, further comprising at least one mobile sensor unit, which is configured to be introduced into the framework structure in a similar way as the storage containers, said sensor unit being provided with sensors to detect growth parameters in a current location of the sensor unit.

8. The system according to one of claims 2-4, wherein the growth controller is configured to:
apply a state model including a set of predefined growth states, each growth state being associated with at least one growth regime, and
based on the determined growth status, identify a current growth state and select a growth regime associated with the current growth state.

9. The system according to claim 8, wherein the identification of growth state and selection of growth regime is based also on historical data related to crop in the storage container.

10. The system according to claim 8 or 9, wherein the selection of growth regime is based also on a desired end growth state.

11. The system according to one of claims 8 - 10, wherein each climate zone is associated with one and only one growth state.

12. The system according to one of the preceding claims, wherein the growth monitoring station is configured to enable performing growth promoting actions, such as watering.

13. The system according to claim 12, wherein the growth monitoring station is configured to receive the storage container in a position in which the storage container is accessible to a user.

14. The system according to one of the preceding claims, wherein said climate zones are a result of operation of the lighting devices.

15. A method for cultivating crops in an illuminated cultivation storage system according to one of claims 1-14 comprising a framework structure having a three-dimensional framework of horizontal and vertical structural elements forming a grid of vertical storage tunnels or horizontal storage tunnels, a plurality of storage containers for holding growing crops and wherein the interior of the framework structure exhibits distinguishable climate zones having a set of growth parameters, including temperature, within predefined ranges, said method comprising:
receiving a storage container holding growing crops;
determining a current growth status of the growing crops in the received storage container;
returning the received storage container to a designated climate zone based on the determined current growth status of the growing crops in the received storage container.

16. The method according to claim 15, further comprising:
determining a growth regime for the crops in the received storage container, the growth regime being a set of controllable growth modulators including temperature and illumination;
returning the received storage container to a designated position within the designated climate zone based on the determined growth regime.

17. The method according to claim 16, further comprising:
applying a state model including a set of predefined growth states, each growth state being associated with at least one growth regime, and
based on the determined growth status, identifying a current growth state and select a growth regime associated with the current growth state.

## Patentansprüche

1. Beleuchtetes Anbaulagersystem, umfassend:
eine Gerüststruktur mit einem dreidimensionalen Gerüst aus horizontalen und vertikalen Strukturelementen, die ein Raster aus vertikalen Lagertunneln oder horizontalen Lagertunneln bilden;
mehrere Lagerbehälter zum Halten von wachsenden Nutzpflanzen, wobei die Lagerbehälter ausgebildet sind, um in einer Stapelformation in einem vertikalen Lagertunnel oder in einer Reihenformation in einem horizontalen Lagertunnel in die Gerüststruktur eingeführt zu werden;
mehrere Beleuchtungsvorrichtungen, die in der Gerüststruktur angeordnet sind, wobei jede Beleuchtungsvorrichtung ausgebildet ist, um zumindest einen Lagerbehälter zu beleuchten;
ein Transportsystem zum Bewegen der Lagerbehälter innerhalb der Gerüststruktur; und
eine Beleuchtungssteuereinheit, die mit jeder Beleuchtungsvorrichtung verbunden ist, wobei jede Beleuchtungssteuereinheit ausgebildet ist, um die Lichtintensität einer zugeordneten Beleuchtungsvorrichtung zu steuern, um das Wachstum der wachsenden Nutzpflanzen, die von der Beleuchtungsvorrichtung beleuchtet werden, zu modulieren;
wobei das Innere der Gerüststruktur unterscheidbare Klimazonen zeigt, wobei jede Klimazone einen Satz von Wachstumsparametern, einschließlich Temperatur, innerhalb vordefinierter Bereiche aufweist, **dadurch gekennzeichnet, dass** das beleuchtete Anbaulagersystem eine Wachstumsüberwachungsstation umfasst, die in die Gerüststruktur integriert ist und ausgebildet ist, um einen Lagerbehälter aufzunehmen, wobei die Wachstumsüberwachungsstation Folgendes enthält:
Sensoren zum Bestimmen eines aktuellen Wachstumsstatus von Nutzpflanzen in einem Lagerbehälter, der in der Wachstumsüberwachungsstation aufgenommen ist,
eine Wachstumssteuereinheit, die mit dem Transportsystem verbunden ist und ausgebildet ist, um das Transportsystem so zu betreiben, dass ein ausgewählter Lagerbehälter zu der Wachstumsüberwachungsstation bewegt wird und der ausgewählte Lagerbehälter basierend auf dem aktuellen Wachstumsstatus von Nutzpflanzen in dem ausgewählten Lagerbehälter zu einer festgelegten Klimazone rückgeführt wird.

2. System nach Anspruch 1, wobei die Wachstumssteuereinheit ferner ausgebildet ist, um ein Wachstumsregime für die Nutzpflanzen in dem ausgewählten Lagerbehälter zu bestimmen, wobei das Wachstumsregime ein Satz von steuerbaren Wachstumsmodulatoren, einschließlich Temperatur und Beleuchtung, ist.

3. System nach Anspruch 2, wobei die Wachstumssteuereinheit ausgebildet ist, um das Transportsystem so zu betreiben, dass der ausgewählte Lagerbehälter basierend auf dem Wachstumsregime an eine festgelegte Position innerhalb der festgelegten Klimazone rückgeführt wird.

4. System nach Anspruch 2 oder 3, wobei eine spezifische Beleuchtungssteuereinheit ausgebildet ist, um eine Beleuchtung eines spezifischen Lagerbehälters basierend auf einem Wachstumsregime zu steuern, das für Nutzpflanzen in diesem spezifischen Lagerbehälter bestimmt ist.

5. System nach einem der vorhergehenden Ansprüche, wobei jeder Lagerbehälter einen eindeutigen Bezeichner (ID) aufweist und wobei das System eine Datenbank umfasst, die historische Informationen betreffend die Nutzpflanzen in jedem Lagerbehälter speichert.

6. System nach einem der vorhergehenden Ansprüche, wobei die Gerüststruktur physisch in Substrukturen unterteilt ist, wobei jede Substruktur eine oder mehrere unterscheidbare Klimazonen aufweist.

7. System nach einem der vorhergehenden Ansprüche, ferner umfassend zumindest eine mobile Sensoreinheit, die ausgebildet ist, um auf ähnliche Weise wie die Lagerbehälter in die Gerüststruktur eingeführt zu werden, wobei die Sensoreinheit mit Sensoren zum Detektieren von Wachstumsparametern an einem aktuellen Ort der Sensoreinheit ausgestattet ist.

8. System nach einem der Ansprüche 2 bis 4, wobei die Wachstumssteuereinheit für Folgendes ausgebildet ist:
Anwenden eines Zustandsmodells, das einen Satz von vordefinierten Wachstumszuständen enthält, wobei jeder Wachstumszustand zumindest einem Wachstumsregime zugeordnet ist, und
basierend auf dem bestimmten Wachstumsstatus Identifizieren eines aktuellen Wachstumszustands und Auswählen eines Wachstumsregimes, das dem aktuellen Wachstumszustand zugeordnet ist.

9. System nach Anspruch 8, wobei die Identifizierung des Wachstumszustands und die Auswahl des Wachstumsregimes auch auf historischen Daten betreffend Nutzpflanzen in dem Lagerbehälter basieren.

10. System nach Anspruch 8 oder 9, wobei die Auswahl des Wachstumsregimes auch auf einem gewünschten Endwachstumszustand basiert.

11. System nach einem der Ansprüche 8 bis 10, wobei jede Klimazone einem und nur einem Wachstumszustand zugeordnet ist.

12. System nach einem der vorhergehenden Ansprüche, wobei die Wachstumsüberwachungsstation ausgebildet ist, um das Durchführen von wachstumsfördernden Maßnahmen wie z. B. Bewässern zu ermöglichen.

13. System nach Anspruch 12, wobei die Wachstumsüberwachungsstation ausgebildet ist, um den Lagerbehälter in einer Position aufzunehmen, in der der Lagerbehälter für einen Benutzer zu erreichen ist.

14. System nach einem der vorhergehenden Ansprüche, wobei die Klimazonen ein Ergebnis des Betriebs der Beleuchtungsvorrichtungen sind.

15. Verfahren zum Anbauen von Nutzpflanzen in einem beleuchteten Anbaulagersystem nach einem der Ansprüche 1 bis 14, umfassend eine Gerüststruktur mit einem dreidimensionalen Gerüst aus horizontalen und vertikalen Strukturelementen, die ein Raster aus vertikalen Lagertunneln oder horizontalen Lagertunneln bilden, mehrere Lagerbehälter zum Halten von wachsenden Nutzpflanzen und wobei das Innere der Gerüststruktur unterscheidbare Klimazonen zeigt, die einen Satz von Wachstumsparametern, einschließlich Temperatur, innerhalb vordefinierter Bereiche aufweisen, wobei das Verfahren Folgendes umfasst:
Aufnehmen eines Lagerbehälters, der wachsende Nutzpflanzen hält; Bestimmen eines aktuellen Wachstumsstatus der wachsenden Nutzpflanzen in dem aufgenommenen Lagerbehälter;
Rückführen des aufgenommenen Lagerbehälters zu einer festgelegten Klimazone basierend auf dem bestimmten aktuellen Wachstumsstatus der wachsenden Nutzpflanzen in dem aufgenommenen Lagerbehälter.

16. Verfahren nach Anspruch 15, ferner umfassend:
Bestimmen eines Wachstumsregimes für die Nutzpflanzen in dem aufgenommenen Lagerbehälter, wobei das Wachstumsregime ein Satz von steuerbaren Wachstumsmodulatoren, einschließlich Temperatur und Beleuchtung, ist;
Rückführen des aufgenommenen Lagerbehälters an eine festgelegte Position innerhalb der festgelegten Klimazone basierend auf dem bestimmen Wachstumsregime.

17. Verfahren nach Anspruch 16, ferner umfassend:
Anwenden eines Zustandsmodells, das einen Satz von vordefinierten Wachstumszuständen enthält, wobei jeder Wachstumszustand zumindest einem Wachstumsregime zugeordnet ist, und
basierend auf dem bestimmten Wachstumsstatus Identifizieren eines aktuellen Wachstumszustands und Auswählen eines Wachstumsregimes, das dem aktuellen Wachstumszustand zugeordnet ist.

## Revendications

1. Système éclairé de stockage de cultures, comprenant :
une structure de cadre comportant un cadre tridimensionnel d'éléments structurels horizontaux et verticaux formant une grille de tunnels de stockage vertical ou de tunnels de stockage horizontal ;
une pluralité de contenants de stockage pour retenir des récoltes en cours de croissance, les contenants de stockage étant conçus pour être introduits dans la structure de cadre dans une formation empilée dans un tunnel de stockage vertical ou dans une formation en train dans un tunnel de stockage horizontal ;
une pluralité de dispositifs d'éclairage disposés dans la structure de cadre, chaque dispositif d'éclairage étant conçu pour éclairer au moins un contenant de stockage ;
un système de transport pour déplacer lesdits contenants de stockage dans la structure de cadre ; et
un contrôleur d'éclairage connecté à chaque dispositif d'éclairage,
chaque contrôleur d'éclairage étant conçu pour commander l'intensité lumineuse d'un dispositif d'éclairage associé afin de moduler la croissance desdites récoltes en cours de croissance éclairées par ledit dispositif d'éclairage ;
l'intérieur de la structure de cadre présentant des zones climatiques différentiables, chaque zone climatique ayant un ensemble de paramètres de croissance, y compris la température, dans des plages prédéfinies,
**caractérisé en ce que** le système éclairé de stockage de cultures comprend :
une station de contrôle de croissance intégrée dans la structure de cadre et conçue pour recevoir un contenant de stockage, ladite station de contrôle de croissance incluant :
des capteurs pour déterminer un état de croissance actuel des récoltes dans un contenant de stockage reçu dans la station de contrôle de croissance,
un contrôleur de croissance connecté au système de transport et conçu pour actionner le système de transport afin de déplacer un contenant de stockage sélectionné vers la station de contrôle de croissance, et pour renvoyer le contenant de stockage sélectionné à une zone climatique désignée en se basant sur l'état de croissance actuel des récoltes dans le contenant de stockage sélectionné.

2. Système selon la revendication 1, dans lequel le contrôleur de croissance est en outre conçu pour déterminer un régime de croissance des récoltes dans le contenant de stockage sélectionné, le régime de croissance étant un ensemble de modulateurs de croissance contrôlables incluant la température et l'éclairage.

3. Système selon la revendication 2, dans lequel le contrôleur de croissance est conçu pour actionner le système de transport afin de renvoyer le contenant de stockage sélectionné à une position désignée dans la zone climatique désignée en se basant sur le régime de croissance.

4. Système selon la revendication 2 ou 3, dans lequel un contrôleur d'éclairage particulier est conçu pour contrôler l'éclairage d'un contenant de stockage particulier en se basant sur un régime de croissance déterminé pour les récoltes dans ce contenant de stockage particulier.

5. Système selon l'une quelconque des revendications précédentes, dans lequel chaque contenant de stockage a un identifiant unique (ID), et le système comprend une base de données stockant des informations historiques concernant les récoltes dans chaque contenant de stockage.

6. Système selon l'une quelconque des revendications précédentes, dans lequel la structure de cadre est divisée physiquement en sous-structures, chaque sous-structure comportant une ou plusieurs zones climatiques différentiables.

7. Système selon l'une quelconque des revendications précédentes, comprenant en outre au moins une unité de capteurs mobile qui est conçue pour être introduite dans la structure de cadre de manière similaire aux contenants de stockage, chaque unité de capteurs étant pourvue de capteurs pour détecter des paramètres de croissance dans un emplacement actuel de l'unité de capteurs.

8. Système selon l'une quelconque des revendications 2 à 4, dans lequel le contrôleur de croissance est conçu pour :
appliquer un modèle d'état incluant un ensemble d'états de croissance prédéfinis, chaque état de croissance étant associé à au moins un régime de croissance, et
à partir de l'état de croissance déterminé, identifier un état de croissance actuel et sélectionner un régime de croissance associé à l'état de croissance actuel.

9. Système selon la revendication 8, dans lequel l'identification de l'état de croissance et la sélection du régime de croissance sont basées également sur des données historiques concernant la récolte dans le contenant de stockage.

10. Système selon la revendication 8 ou 9, dans lequel la sélection du régime de croissance est basée également sur un état de croissance final désiré.

11. Système selon l'une quelconque des revendications 8 à 10, dans lequel chaque zone climatique est associée à un seul et unique état de croissance.

12. Système selon l'une quelconque des revendications précédentes, dans lequel la station de contrôle de croissance est conçue pour permettre la réalisation d'actions favorisant la croissance, comme l'arrosage.

13. Système selon la revendication 12, dans lequel la station de contrôle de croissance est conçue pour recevoir le contenant de stockage dans une position dans laquelle le contenant de stockage est accessible à un utilisateur.

14. Système selon l'une quelconque des revendications précédentes, dans lequel lesdites zones climatiques sont le résultat de l'activation des dispositifs d'éclairage.

15. Procédé de culture de récoltes dans un système éclairé de stockage de cultures selon une des revendications 1 à 14, comprenant une structure de cadre comportant un cadre tridimensionnel d'éléments structurels horizontaux et verticaux formant une grille de tunnels de stockage verticaux ou de tunnels de stockage horizontaux, une pluralité de contenants de stockage pour retenir des récoltes en cours de croissance et l'intérieur de la structure de cadre présentant des zones climatiques différentiables ayant un ensemble de paramètres de croissance, y compris la température, dans des plages prédéfinies, ledit procédé comprenant :
la réception d'un contenant de stockage retenant des récoltes en cours de croissance ;
la détermination d'un état de croissance actuel des récoltes en cours de croissance dans le contenant de stockage reçu ;
le renvoi du contenant de stockage reçus à une zone climatique désignée en se basant sur l'état de croissance actuel déterminé des récoltes en cours de croissance dans le contenant de stockage reçu.

16. Procédé selon la revendication 15, comprenant en outre :
la détermination d'un régime de croissance pour les récoltes dans le contenant de stockage reçu, le régime de croissance étant un ensemble de modulateurs de croissance contrôlables incluant la température et l'éclairage ;
le renvoi du contenant de stockage reçu à une position désignée dans la zone climatique désignée en se basant sur le régime de croissance déterminé.

17. Procédé selon la revendication 16, comprenant en outre :
l'application d'un modèle d'état incluant un ensemble d'états de croissance prédéfinis, chaque état de croissance étant associé à au moins un régime de croissance, et
en se basant sur l'état de croissance prédéfini, l'identification d'un état de croissance actuel et la sélection d'un régime de croissance associé à l'état de croissance actuel.
